## Europäisches Patentamt

## European Patent Office

## Office européen des brevets

(11) Veröffentlichungsnummer: **0 150 375**
**B1**

# EUROPÄISCHE PATENTSCHRIFT

(12)

(51) Int. Cl.⁴: **B 23 K 33/00**

(45) Veröffentlichungstag der Patentschrift:
31.05.89

(21) Anmeldenummer: 84115126.9

(22) Anmeldetag: 11.12.84

(54) Verfahren zum Herstellen eines geschweissten Druckbehälters und danach hergestellter Druckbehälter.

(30) Priorität: 27.01.84 DE 3402766

(43) Veröffentlichungstag der Anmeldung:
07.08.85 Patentblatt 85/32

(45) Bekanntmachung des Hinweises auf die Patenterteilung:
31.05.89 Patentblatt 89/22

(84) Benannte Vertragsstaaten:
BE FR IT LU NL SE

(56) Entgegenhaltungen:
EP-A-0 096 788
DE-B-2 236 069
US-A-1 995 546
US-A-2 127 828
US-A-3 705 453

(73) Patentinhaber: Linnemann- Schnetzer GmbH & Co.,
Ostbredenstraße Postfach 569, D-4730 Ahlen (DE)

(72) Erfinder: Welsch, Klaus, Wahnscheid 8a, D-5805
Breckerfeld (DE)

(74) Vertreter: Knoblauch, Ulrich, Dr.- Ing.,
Kühhornshofweg 10, D-6000 Frankfurt am Main 1
(DE)

## Beschreibung

Die Erfindung betrifft ein Verfahren zum Herstellen eines geschweißten Druckbehälters, insbesondere Druckluftbehälters für Fahrzeug-Bremskraftanlagen, bei dem ein zylindrischer Mantel und zwei gewölbte, mit zylindrischen Endteilen versehenen Böden hergestellt, die Böden durch eine außen am Mantel und diesen Endteilen angreifenden Zentriervorrichtung zentriert und mit dem Mantel ausgerichtet, Böden und Mantel axial gegeneinander gedrückt und durch in Umfangsrichtung gelegte Schweißnähte unter Durchschweißung des Mantels miteinander verbunden werden.

Ein Verfahren zum Herstellen eines geschweißten Behälters mit den oben angegebenen Merkmalen ist aus EP-A-96 788 bekannt. Dabei werden dünnwandige kreiszylindrische Hohlkörper zusammengehalten und zentriert, um sie durch eine Umfangsnaht entlang ihrer stirnseitigen Kanten miteinander zu verschweißen.

Bei einem weiteren bekannten Verfahren (DE-AS-2 236 069) werden die gewölbten Bögen eines Druckbehälters an ihrem dem Mantel zugewandten Ende mit einem konisch nach innen gezogenen Flansch versehen, der bei axialem Zusammendrücken der Behälterteile eine Zentrierung bewirkt. Der im fertigen Behälter nach innen ragende Flansch behindert aber die gleichmäßige Ausbildung eines Rostschutzüberzuges, der mit Hilfe einer durch einen Anschlußstutzen eingeführten Sprühvorrichtung aufgetragen wird. Die Teile werden auf einer kontinuierlich arbeitenden Rundschweißmaschine miteinander Verschweißt. Hierbei wird der Mantel im Bereich der Schweißnaht völlig durchgeschweißt, so daß die Spitze des zwischen dem konischen Innenflansch und dem Mantel gebildeten Spaltes mit Schweißmaterial gefüllt und dadurch der mit Rostschutzmittel zu überziehende Spaltgrund angehoben und verbreitert wird. Auf diese Weise können Korrosionen im Bereich der Schweißnaht weitgehend verhindert werden.

Durckbehälter müssen eine gegenüber drucklosen Behältern erhöhte Festigkeit haben. Es ist daher Vorschrift, daß die Schweißnähte sich längs des größten Teils der Schweißnahtlänge über die gesamte Dicke der verhältnismäßig dünnen Mantelwand erstrecken. Die Schweißung kann nur von außen erfolgen, da der fertige Behälter bis auf die Anschlußstutzen vollständig verschlossen ist. Das vollständige Durchschweißen kann dadurch kontrolliert werden, daß die Wurzel der Schweißnaht geringfügig über die Innenseite des Mantels vorsteht (Wurzeldurchhang).

Ein Verfahren zum Verschweißen von aneinanderstoßenden Kanten ist aus der US-A-1 995 546 bekannt. Dazu wird eine Abstandshalterplatte verwendet, die einen V-förmigen Vorsprung hat, der in den Spalt zwischen den zu verschweißenden Platten eingelegt wird. Die Abstandshalterplatte weist an ihren beiden parallel zu dem V-förmig verlaufenden Kanten Abschrägungen auf, an denen die Abstandshalterplatte mit einer der zu verbindenden Platte verschweißt wird. Danach wird die zweite Platte mit Hilfe einer Schraube und einer Klemmvorrichtung an der Abstandshalterplatte befestigt und mit der Abstandshalterplatte an der zweiten Abschrägung verschweißt. Nach Entfernen der Schraube wird der durch die Abstandshalterplatte nicht vollständig ausgefüllte Spalt verschweißt und das Schraubenloch mit Schweißmaterial gefüllt.

Der Erfindung liegt die Aufgabe zugrunde, ein Verfahren der eingangs beschriebenen Art anzugeben, mit dem Druckbehälter hergestellt werden können, die frei von inneren Vorsprüngen sind und daher auf einfache Weise mit einem dauerhaften Rostschutzüberzug versehen werden können.

Diese Aufgabe wird erfindungsgemäß dadurch gelöst, daß die Böden aus kreisrunden Platinen tiefgezogen werden, die am Umfang einzelne Vorsprünge tragen, die zur Bildung eines Spalts zwischen den einanderzugewandten Stirnseiten von Boden und Mantel als Abstandsnocken vorgesehen werden.

Dadurch, daß die Teile des Behälters durch von außen angreifende Zentriervorrichtungen ausgerichtet werden, brauchen die Böden keine konischen Zentrierflansche aufzuweisen, sondern können mit zylindrischen Endteilen versehen sein. Die Böden werden dabei aus kreisrunden Platinen tiefgezogen, die am Umfang einzelne Vorsprünge tragen. Diese Vorsprünge bilden nach dem Tiefziehen die Abstandsnocken. Dadurch, daß die Stirnseiten von vornherein mit Abstandsnocken versehen sind, ergibt sich vor dem Schweißen ein Spalt, mit dessen Hilfe es möglich ist, die Schweißnaht sehr sauber so zu legen, daß sich eine vollständige Durchschweißung des Mantels ergibt. Hierbei kann eine verhältnismäßig hohe Schweißgeschwindigkeit angewendet werden. Der Grund hierfür liegt darin, daß der Spalt mit von außen zugeführtem Schweißmaterial gefüllt werden kann und entsprechend weniger Material vom Mantel und vom Boden abgeschmolzen werden muß. Würde man dagegen die Stirnfläche von Boden und Mantel ringsum aneinander anliegen lassen, müßte sehr viel mehr Behältermaterial geschmolzen werden, was zu einer geringeren Schweißgeschwindigkeit führt, und es wäre praktisch unmöglich, die Schweißleistung gerade so zu steuern, daß einerseits ein vollständiges Durchschweißen auftritt, andererseits das Schweißmaterial nicht nach innen durchtropft. Da die Abstandsnocken einstückig mit dem Boden ausgebildet sind, werden die außen angreifenden Zentriervorrichtungen nicht durch von außen einführbare Abstandshalter behindert. Dies hat allerdings zur Folge, daß sich im Bereich der Abstandsnocken geringfügig andere Schweißverhältnisse ergeben. Dies ist aber zulässig, weil es sich nur um wenige Abstandsnocken, in der Regel nicht mehr als 10, handelt, deren Erstreckung nur wenige Prozent der gesamten Schweißnahtlänge ausmacht und daher die Festigkeit des Druckbehälters nicht schädlich beeinflußt, andererseits aber die Schweißnaht auch im Bereich der Abstandsnocken absolut dicht ist. Im übrigen kann durch geringfügige Erhöhung der Schweißstromstärke im Bereich der Abstandsnocken die Schweißnaht ringsum das gleiche Aussehen erhalten. Der Mantel kann, wie bisher, aus rechteckigen Platten gebogen werden, die durch gerade Messer geschnitten werden sind.

Besonders günstig ist es, wenn jeweils drei um 120° versetzte Abstandsnocken vorgesehen werden. Durch drei Abstandsnocken ist die Spaltweite ringsum genau festgelegt. Der Einfluß so weniger Abstandsnocken auf die gesamte Festigkeit ist vernachlässigbar.

Am Boden werden vorzugsweise Abstandsnocken verwendet, die an beiden Seiten gerundet sind und mit einer Rundung entgegengesetzter Krümmung in die Stirnseite übergehen. Diese Form stellt sicher, daß beim Tiefziehen keine unerwünschten Risse oder Spannungen auftreten. Außerdem ist beim Schweißen ein allmählicher Übergang vom freien Spalt zum durch die Nocken gefüllten Spalt vorgesehen, der Sprünge in den Eigenschaften der Schweißnaht verhindert.

Vorzugsweise werden Mantel und Boden mit unterschiedlichenWandstärken ausgebildet, die durch Mantel und Boden gebildete Innenfläche ist durchgehend und weist höchstens einen Sprung auf und die Schweißnähte werden bis auf wenige in Umfangsrichtung versetzte Stellen, die weniger als 5 % der Umfangslänge ausmachen, ringsum völlig durchgeschweißt. Da die Wandstärke der Böden höchstens um 1 oder 2 mm größer ist als diejenige des Mantels, ist die Innenfläche praktisch durchgehend. Der Rostschutzüberzug läßt sich leicht in geschlossener Form aufbringen.

Mit besonderem Vorteil bildet die Wurzel der durchgeschweißten Schweißnähte einen den Sprung verkleinernden Übergang. Hierdurch wird die Unterlagefläche für das Auftragen des Rostschutzüberzuges noch verbessert.

Die Erfindung wird nachstehend anhand eines in der Zeichnung veranschaulichten, bevorzugten Ausführungsbeispiels näher erläutert. Es zeigen:

Fig. 1     eine Seitenansicht eines Druckluftbehälters, wie er erfindungsgemäß hergestellt werden kann,

Fig. 2     eine Stirnansicht des Behälters bei der Herstellung,

Fig. 3     eine Platine vor dem Tiefziehen eines Bodens,

Fig. 4     einen Boden von der offenen Stirnseite her,

Fig. 5     eine vergrößerte Darstellung eines Abstandsnockens und

Fig. 6     einen vergrößerten Schnitt durch den Bereich einer Stumpfschweißnaht.

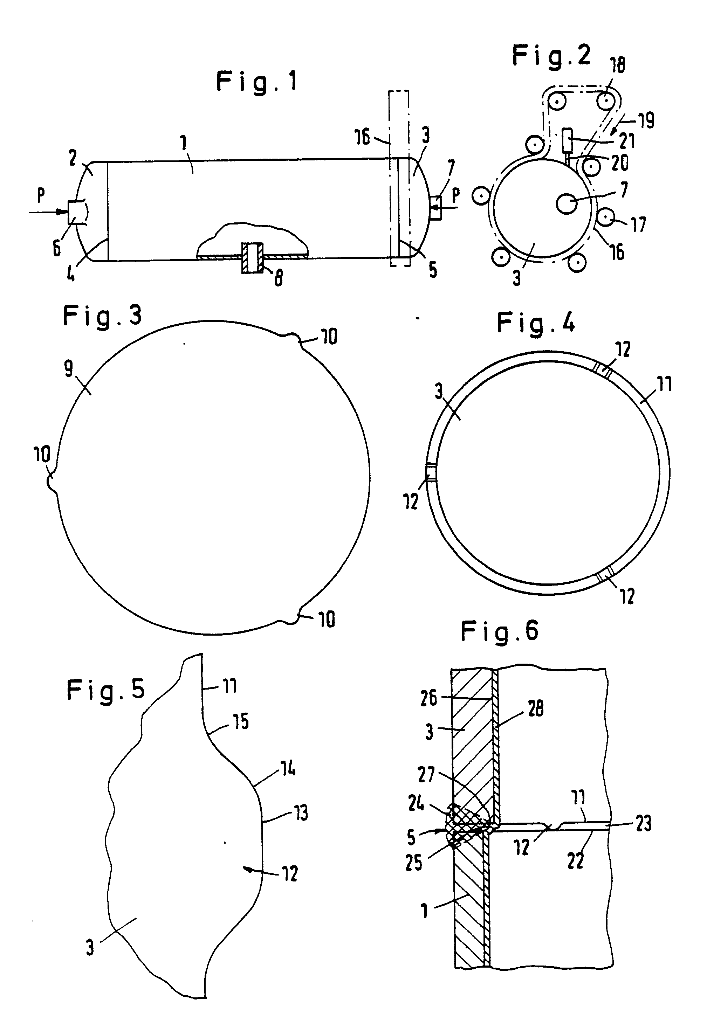

Der Druckbehälter in Fig. 1 besteht aus einem zylindrischen Mantel 1 und zwei gewölbten, zylindrische Endabschnitte aufweisenden Böden 2 und 3, die mittels zweier Stumpfschweißnähte 3 und 4 mit dem Mantel 1 verbunden sind. Ferner sind im Mantel 1 sowie in den Böden 2 und 3 verschiedene Stutzen 6, 7 und 8 vorgesehen, die zum Anschluß der Druckluft Füll- oder Entnahmeleitungen oder zum Einbau eines Ablaufhahns dienen.

Der Mantel kann dadurch hergestellt werden, daß eine rechteckig zugeschnittene Blechplatte zu einem Zylinder gerollt und dann die aneinandergrenzenden Kanten mittels einer Axialschweißnaht verbunden werden. Zur Herstellung der Böden wird eine kreisrunde Blechplatine 9 (Fig. 3) in einem entsprechenden Werkzeug tiefgezogen. Die Platine 9 hat an ihrem Umfang drei um 120° versetzte Vorsprünge 10, die im fertigen Boden 3 an dessen Stirnseite 11 vorstehende Abstandsnocken 12 bilden.

Ein solcher Abstandsnocken 12 ist in Fig. 5 vergrößert veranschaulicht. Er besitzt eine ebene Vorderkante 13, die mit einer ersten Rundung 14 und einer zweiten Rundung 15 entgegengesetzter Krümmung in die Stirnseite 11 übergeht.

Zur Vorbereitung des Schweißvorganges werden der Mantel 1 und die Böden 2 und 3 so angeordnet, wie es in Fig. 1 veranschaulicht ist. Eine als Zentriervorrichtung 16 dienende Kette übergreift die der späteren Naht 5 benachbarten Zylinderabschnitte des Mantels 1 und des Bodens 3. Die Zentriervorrichtung 16 ist durch eine Anzahl von Führungsrollen 17, die dem Durchmesser des Behälters entsprechend angeordnet werden können, so geführt, daß die beiden Behälterteile genau miteinander ausgerichtet sind. Eine entsprechende Zentriervorrichtung kann auch die spätere Naht 4 übergreifen. Die Kette der Zentriervorrichtung 16 wird mittels eines Antriebszahnrades 18 in Richtung des Pfeiles 19 angetrieben und bewegt dabei den Behälterumfang an der Schweißelektrode 20 einer feststehenden Schweißvorrichtung 21 vorbei. Eine nicht veranschaulichte Spannvorrichtung, z. B. eine hydraulische Kolben-Zylinder-Anordnung, drückt die Behälterteile mit den Kräften P axial gegeneinander. Hierbei wird der Abstandsnocken 12 gegen die Stirnfläche 22 des Mantels 1 gedrückt. Somit verbleibt zwischen Mantel 1 und Boden 3 ein Spalt 23 (Fig. 6).

Beim Legen der Stumpfschweißnaht 5 wird das Blechmaterial des Mantels 1 und des Bodens 3 vom Außenumfang her erweicht und gleichzeitig Schweißmaterial in den Spalt 23 eingeführt. Daher bildet sich bei verhältnismäßig hoher Schweißgeschwindigkeit eine Naht, mit etwa keilförmigem Querschnitt 24, wobei der Mantel 1 ganz durchgeschweißt ist und die Wurzel 25 der Schweißnaht nach innen geringfügig durchhängt.

Infolge der Verwendung des Spaltes 23 läßt sich der Schweißstrom in Abhängigkeit von der Schweißgeschwindigkeit ziemlich genau so einstellen, daß die Schweißnaht den Mantel 1 durchsetzt, aber nicht nach innen durchtropft. Auch im Bereich der Abstandsnocken 12 wird bei vorgegebenem Schweißstrom ein vollständiges Aufschmelzen des Mantels 1 erreicht; jedoch tritt an diesen Stellen meistens kein Wurzeldurchhang auf. Da ohnehin nur drei Abstandsnocken geringer Größe vorhanden sind, wird hierdurch die Festigkeit des Behälters nicht beeinträchtigt. Eine entsprechende Stumpfschweißnaht 4 wird gleichzeitig oder anschließend zwischen dem Mantel 1 und dem Boden 2 erzeugt.

Der so fertiggeschweißte Behälter weist eine durchgehende Innenfläche 26 auf, die höchstens einen Sprung 27 an der Stelle hat, wo das dickere Bodenmaterial mit dem dünneren Mantelmaterial aneinandergrenzt. An dieser Stelle steht aber die Wurzel 25 etwas über den Mantel 1 nach innen vor, so daß der Übergang im Sprungbereich verkleinert wird. Vorzugsweise wird der Schweißvorgang so gesteuert, daß die Wurzel, zumindest außerhalb der Abstandsnocken 12, bis an die Innenfläche des Bodens 3 reicht und somit einen allmählichen Übergang schafft.

Durch Einbringen einer Sprühvorrichtung beispielsweise in den Stutzen 8 läßt sich nunmehr diese Innenfläche 26 mühelos mit einer gleichmäßigen und durchgehenden Rostschutzschicht 28 überziehen. Hierbei wird auch die Wurzel 25 der Schweißnaht 24 sauber abgedeckt, so daß keine Korrosionen zu befürchten sind.

Die Weite des Spaltes 23 hängt von der Blechdicke ab. Sie kann etwa 0,2 bis 2,0 mm betragen. Im allgemeinen hat der Mantel 1 eine Wandstärke von 2 mm, während die Deckel 2 und 3 eine etwas größere Wandstärke von 3 bis 4 mm haben. Bei einem Ausführungsbeispiel, bei dem der Behälterdurchmesser 206 mm betrug, war die Spaltweite 1,5 mm. Die ebene Vorderseite 13 hatte eine Umfangserstreckung von 1 mm, während die Radien der Krümmungsabschnitte 14 und 15 je 2 mm betrugen. Bei größeren Behältern kann die Zahl der Abstandsnocken 12 auch vermehrt werden. Ihre Erstreckung sollte jedoch immer klein im Vergleich zur Umfangslänge sein.

## Patentansprüche

1. Verfahren zum Herstellen eines geschweißten Druckbehälters, insbesondere Druckluftbehälters für Fahrzeug-Bremskraftanlagen, bei dem ein zylindrischer Mantel (1) und zwei gewölbte, mit zylindrischen Endteilen versehenen Böden (2, 3) hergestellt, die Böden durch eine außen am Mantel und diesen Endteilen angreifenden Zentriervorrichtung (16) zentriert und mit dem Mantel ausgerichtet, Böden und Mantel axial gegeneinander gedrückt und durch in Umfangsrichtung gelegte Schweißnähte (5) unter Durchschweißung des Mantels miteinander verbunden werden, dadurch gekennzeichnet, daß die Böden aus kreisrunden Platinen (9) tiefgezogen werden, die am Umfang einzelne Vorsprünge (10) tragen, die zur Bildung eines Spalts (23) zwischen den einander zugewandten Stirnseiten (11, 22) von Boden und Mantel als Abstandsnocken (12) vorgesehen werden.

2. Verfahren nach Anspruch 1, dadurch gekennzeichnet, daß jeweils drei um 120° versetzte Abstandsnocken (12) vorgesehen werden.

3. Verfahren nach einem der Ansprüche 1 bis 2, dadurch gekennzeichnet, daß Abstandsnocken (12) verwendet werden, die an beiden Seiten gerundet sind und mit einer Rundung entgegengesetzter Krümmung in die Stirnseite (11) übergehen.

4. Verfahren nach einem der Ansprüche 1 bis 3, dadurch gekennzeichnet, daß die Wandstärke von Mantel (1) und Boden (2, 3) unterschiedlich ausgebildet wird, daß die durch Mantel (1) und Boden (2, 3) gebildete Innenfläche (26) durchgehend ausgebildet wird und höchstens einen Sprung (27) aufweist und daß die Schweißnähte (24) bis auf wenige in Umfangsrichtung versetzte Stellen, die weniger als 5 % der Umfangslänge ausmachen, ringsum völlig durchgeschweißt werden.

5. Verfahren nach Anspruch 4, dadurch gekennzeichnet, daß die Wurzel (25) der durchgeschweißten Schweißnähte (24) einen den Sprung (27) verkleinernden Übergang bildet.

## Claims

1. Process for the manufacture of a welded pressure vessel, particularly of a compressed air container for vehicle braking systems, in which a cylindrical shell (1) and two curved floors (2, 3) provided with cylindrical end parts are manufactured, the floors are centred and aligned with the shell by a centering device (16) engaging externally on the shell and these end parts, floors and shell are pressed axially against one another and connected with one another by weld seams (5) located in the peripheral direction with welding right through the shell, characterised in that the floors are deep drawn from circular round blanks (9) which carry at their periphery individual projections (10) which are provided to form a slot (23) between the end faces (11, 22) of floor and shell turned towards one another as standoff beads (12).

2. Process according to Claim 1, characterised in that three standoff beads (12) offset by 120° are provided.

3. Process according to one of Claims 1 to 2, characterised in that standoff beads (12) are used which are rounded on both sides and which merge with a rounding of opposite curvature into the end face (11).

4. Process according to one of Claims 1 to 3, characterised in that the wall thickness of shell (1) and floors (2, 3) are formed different, that the inner surface (26) formed by shell (1) and floors (2, 3) is constructed continuously and, at most, has a step (27) and that the weld seam (24) apart from a few positions offset in the peripheral direction, which make up less than 5 % of the peripheral length, is wholly welded through right round.

5. Process according to Claim 4, characterised in that the root (25) of the welded through weld seam (24) forms a transition reducing the step (27).


**Revendications**

1. Procédé de fabrication d'un réservoir de pression soudé, notamment d'un réservoir à air comprimé pour installations de freinage de véhicules, dans lequel, après avoir produit une enveloppe cylindrique (1) et deux fonds bombés (2, 3) munis de régions extrêmes cylindriques, lesdits fonds sont centrés par l'intermédiaire d'un dispositif de centrage (16) venant en prise extérieurement avec l'enveloppe et avec ces régions extrêmes, puis sont alignés avec l'enveloppe, les fonds et l'enveloppe étant ensuite mutuellement pressés dans le sens axial et solidarisés par des cordons de soudure (5) ménagés dans le sens circonférentiel, avec soudage de l'enveloppe de bout en bout, caractérisé par le fait que les fonds sont venus d'emboutissage à partir de disques circulaires (9) portant, sur leur pourtour, des saillies individuelles (10) qui sont prévues en tant que protubérances d'espacement (12), afin de former un interstice (23) entre les faces extrêmes (11, 22) mutuellement opposées du fond et de l'enveloppe.

2. Procédé selon la revendication 1, caractérisé par le fait que trois protubérances d'espacement (12) sont prévues avec décalage respectif de 120°.

3. Procédé selon l'une des revendications 1 et 2, caractérisé par le fait qu'on utilise des protubérances d'espacement (12) qui sont arrondies des deux côtés, et fusionnent avec la face extrême (11) par un arrondi à courbure opposée.

4. Procédé selon l'une des revendications 1 à 3, caractérisé par le fait que l'épaisseur de paroi de l'enveloppe (1) et du fond (2, 3) est réalisée différente; par le fait que la surface intérieure (26) formée par l'enveloppe (1) et le fond (2, 3) est de réalisation ininterrompue, et présente au maximum une cassure (27); et par le fait que les cordons de soudure (24) sont soudés intégralement de bout en bout dans le sens périphérique, hormis un nombre restreint de zones décalées dans le sens circonférentiel et représentant moins de 5 % de la longueur périphérique.

5. Procédé selon la revendication 4, caractérisé par le fait que le fond de chanfrein (25) des cordons de soudure (24) soudés de bout en bout forme une transition diminuant la cassure (27).

Fig.1

Fig.2

Fig.3

Fig.4

Fig.5

Fig.6